(19) Europäisches Patentamt
European Patent Office
Office européen des brevets

(11) **EP 4 614 355 A1**

(12) **EUROPEAN PATENT APPLICATION**

(43) Date of publication:
**10.09.2025   Bulletin 2025/37**

(21) Application number: **25161298.2**

(22) Date of filing: **03.03.2025**

(51) International Patent Classification (IPC):
**G06F 16/906** (2019.01)    **G06N 3/00** (2023.01)

(52) Cooperative Patent Classification (CPC):
**G06F 16/906; G06N 3/00; G06N 3/045;
G06N 3/048; G06N 3/084**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **07.03.2024   US 202418598218**

(71) Applicant: **Microsoft Technology Licensing, LLC
Redmond, WA 98052 (US)**

(72) Inventors:
• **Patro, Badri Narayana
Redmond, WA 98052 (US)**
• **Agneeswaran, Vijay Srinivas
Redmond, WA 98052 (US)**

(74) Representative: **Grünecker Patent- und
Rechtsanwälte
PartG mbB
Leopoldstraße 4
80802 München (DE)**

(54)    **SPECTRAL ADAPTER FOR ADAPTIVE TRAINING OF TRANSFORMER NETWORKS**

(57)    A device may train a spectral adapter including a spectral neural network during a refinement training phase using a training dataset of the first domain, subsequent to the transformer training phase, wherein the first domain is different from the second domain, the set of multi-level perceptron weights being unchanged during the refinement training phase. A device may configure the feature identification machine learning model to execute the spectral adapter in parallel with the multi-level perceptron to yield an adapted feature identification machine learning model. A device may identify, using the adapted feature identification machine learning model, the features in the input dataset of the first domain.

FIG. 3

**Description**

**Background**

A transformer machine learning model can be used to recognize features in datasets, such as images, audio data, and other data. However, a transformer machine learning model trained to recognize features of a first domain (e.g., dogs) may fail to accurately recognize features of a second domain (e.g., cats). In some scenarios, feature identification in the second domain can be improved by fully retraining the transformer model.

**Summary**

In some aspects, the techniques described herein relate to a method for identifying features in an input dataset of a first domain using a feature identification machine learning model including a multi-level perceptron trained on a training dataset of a second domain to yield a set of multi-level perceptron weights trained on the second domain during a transformer training phase, the method including: training a spectral adapter including a spectral neural network during a refinement training phase using a training dataset of the first domain, subsequent to the transformer training phase, wherein the first domain is different from the second domain, the set of multi-level perceptron weights being unchanged during the refinement training phase; configuring the feature identification machine learning model to execute the spectral adapter in parallel with the multi-level perceptron to yield an adapted feature identification machine learning model; and identifying, using the adapted feature identification machine learning model, the features in the input dataset of the first domain.

In some aspects, the techniques described herein relate to a computing system for identifying features in an input dataset of a first domain using a feature identification machine learning model including a neural network trained on a training dataset of a second domain to yield a set of neural network weights trained on the second domain during a transformer training phase, the computing system including: one or more hardware processors; an adapter processor executable by the one or more hardware processors and configured to: train a spectral adapter including a spectral neural network during a refinement training phase using a training dataset of the first domain, subsequent to the transformer training phase, wherein the first domain is different from the second domain, the set of neural network weights being unchanged during the refinement training phase; and a feature identification model processor executable by the one or more hardware processors and configured to configure the feature identification machine learning model to execute the spectral adapter in parallel with the neural network to yield an adapted feature identification machine learning model and to identify, using the adapted feature identification machine learning model, the features in the input dataset of the first domain.

In some aspects, the techniques described herein relate to one or more tangible processor-readable storage media embodied with instructions for executing on one or more processors and circuits of a computing device a process for identifying features in an input dataset of a first domain using a feature identification machine learning model trained on a training dataset of a second domain to yield a set of machine learning model weights trained on the second domain during a transformer training phase, the process including: training a spectral adapter including a spectral neural network during a refinement training phase using a training dataset of the first domain, subsequent to the transformer training phase, wherein the first domain is different from the second domain, the set of machine learning model weights being unchanged during the refinement training phase; configuring the feature identification machine learning model to execute the spectral adapter in parallel with the feature identification machine learning model to yield an adapted feature identification machine learning model; and identifying, using the adapted feature identification machine learning model, the features in the input dataset of the first domain.

This summary is provided to introduce a selection of concepts in a simplified form that are further described below in the Detailed Description. This summary is not intended to identify key features or essential features of the claimed subject matter, nor is it intended to be used to limit the scope of the claimed subject matter.

Other implementations are also described and recited herein.

**Brief Descriptions of the Drawings**

FIG. 1 illustrates an example feature identification model that is trainable to classify features of a domain that is different from a domain upon which the feature identification model was initially trained.

FIG. 2 illustrates an example flow for a feature identification model.

FIG. 3 illustrates an example flow for using a spectral adapter including at least one spectral neural network for training a machine learning model.

FIG. 4 depicts an example flow for training an adapter of a feature identification model.

FIG. 5 illustrates example operations for identifying features in an input dataset using an adapter of a feature identification machine learning model trained in a refinement training phase to identify features of a first domain different from a second domain upon which the feature identification machine learning model was previously trained.

FIG. 6 illustrates example operations for classifying a dataset.

FIG. 7 illustrates an example computing device for use in implementing the described technology.

## Detailed Descriptions

A transformer machine learning model that is trained to recognize features of a first domain may fail to recognize features of a second domain without retraining or further training of the transformer model. Adapter machine learning models can be used to train transformer models to recognize features of a different domain from the domain for which the transformer model was originally trained. However, conventional adapter-based approaches involve an independent and exhaustive fine-tuning process for each model to suit different tasks, limiting the transferability of the overall model across various visual and textual domains. For instance, conventional approaches to retraining or further training a transformer model involve fully fine-tuning the model on a specific dataset, making it impractical to maintain distinct model weights for every dataset. Such conventional approaches are particularly challenging given the increasing model capacities of contemporary state-of-the-art models that can have a large number of weights and other parameters (e.g., the ViT-22B vision transformer model, which can have 21.7 billion parameters). Consequently, to achieve adequate fine-tuning of transformer models, conventional approaches require ever-increasing amounts of computing resources, including bandwidth usage and storage usage. However, conventional adapter models do not consider the separate transfer of periodic and aperiodic features when training a transformer model to a new domain. Further, the conventional use of adapter models creates local task modules controlled by a global task-agnostic module. However, this conventional approach hinders generalization to novel tasks as the addition of new tasks introduces non-shared parameters between local and global modules.

The technology described herein provides a feature identification machine learning model including a transformer model and an adapter machine learning model that includes a spectral neural network for training the feature identification model on new domains other than the domain upon which the transformer is initially trained. Also, the spectral adapter-based training of the transformer model in the technology described herein shares all parameters across tasks, allowing for the re-modulation of existing weights when introducing a new task and, therefore, enabling the model to exhibit generalization capabilities to novel domains, which is not exhibited in conventional adapter-based approaches that separate local task modules controlled by a global task-agnostic module. By including a spectral neural network (e.g., a spectral MLP) within the spectral adapter, the spectral adapter-based training provided in the technology described herein considers the distinct transfer of periodic and aperiodic features, enhancing the adaptability and performance over conventional adapter approaches, which do not include spectral neural networks that determine and consider such features.

For example, in the case of clinical analysis of medical imaging, a high-resolution MRI image of a patient's lungs can be input into a machine learning model that is trained on MRI images of lungs to identify tumors, lesions, and other features in the input MRI image of the lungs. A machine learning model employing the described technology can be efficiently and quickly trained for a new domain to identify features (of the new domain. For example, the machine learning model employing the described technology, which is initially trained to recognize features in MRI images of lungs, can, in a refinement training phase, be trained using the spectral-based adapter on a set of MRI images of brains to recognize features in MRI images of brains (e.g., to identify tumors, lesions, and other features of MRI images of brains). Applying the technology described herein, feature identification models can adapt to new domains with less computational complexity than in conventional approaches while retaining the diagnostic accuracy for features in the high-resolution MRI image. For example, compared to conventional retraining, the number of new parameters introduced by the spectral adapter network of the described technology is minimal but results in effective training of the feature identification machine learning model on different datasets and improves the performance/accuracy of the feature identification machine learning model on other datasets significantly. As such, adequate diagnostic results across new domains can be obtained quickly with less usage of computing resources over conventional adapter-based training approaches.

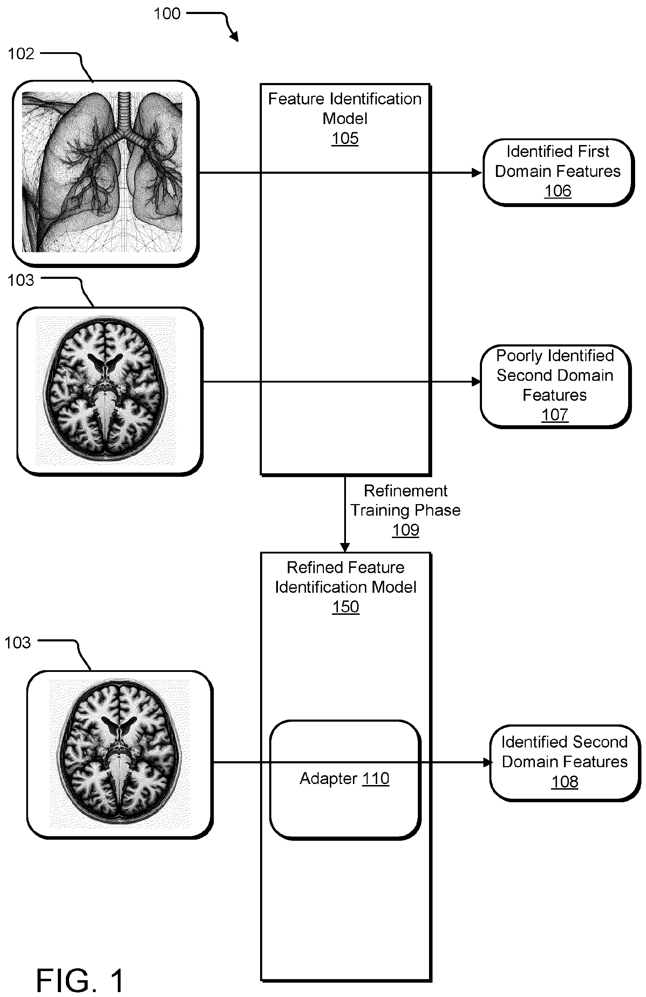

FIG. 1 illustrates an example feature identification model 105 that is trainable to classify features of a domain that is different from a domain upon which the feature identification model 105 was initially trained. Image 102 in this example represents an input dataset that includes medical imaging data of an example patient's lungs, although other types of data may be included in the input dataset, including weather data, drone data, satellite data, audio data, text data, seismic sensor readings, video data, and other data containing discernable features. The system 100 inputs the image 102 to the feature identification model 105, which processes the image 102 and outputs identified first domain features 106 of the image 102.

In the example depicted in FIG. 1, the feature identification model 105 is trained on a dataset of images of the first domain to identify features of the first domain. In the example depicted in FIG. 1, the first domain is MRI imaging of lungs. Accordingly, the feature identification model 105 generates identified first domain features 106 from the input image 102. However, when input image 103, which is of a second domain (brain MRI imaging) that is different from the first domain (lungs MRI imaging), is input to the feature identification model 105, the feature identification model 105 generates poorly identified second domain features 107 because the feature identification model 105 has not been trained to identify features of the second domain. Poorly identified second domain features 107 can include misidentified features, unidentified features, partially identified features, or other outputs in which the feature identification model 105 does not adequately identify features of the second domain in the input image 103. Accordingly, to prepare the feature identification model 105 to adequately identify features of the second domain (brain MRI imaging), as depicted in FIG. 1, the feature identification model 105 is trained in a refinement training phase 109. During the refinement training phase 109, the feature identification model 105 is trained using an adapter 110 to generate a refined feature identification model 150 that is trained to recognize features (e.g., identified second domain features 108) in the second input image 103 of the second domain (e.g., brain MRI imaging).

The identified first domain features 106 and identified second domain features 108 can include a listing of identified features, such as tumors and lesions in medical imaging, faces and corresponding identities in video data, drought and flood conditions in satellite imagery, linguistic tokens in speech audio and text, etc. Further, in some implementations, one or more of the identified first domain features 106 or identified second domain features 108 can be subdivided into at least two categories: (1) global features and (2) local features. In the context of machine learning models, the term "global features" refers to the features of a dataset that describe the dataset as a whole to generalize the dataset itself. Examples include contour representations, shape descriptors, texture features, etc. In contrast, the term "local features" refers to features that describe a specific part of a dataset. Examples include individual facial features of a human in an image and their placement relative to other individual local features, a localized low-pressure system in weather data, distinct terms in audio or text content, etc.

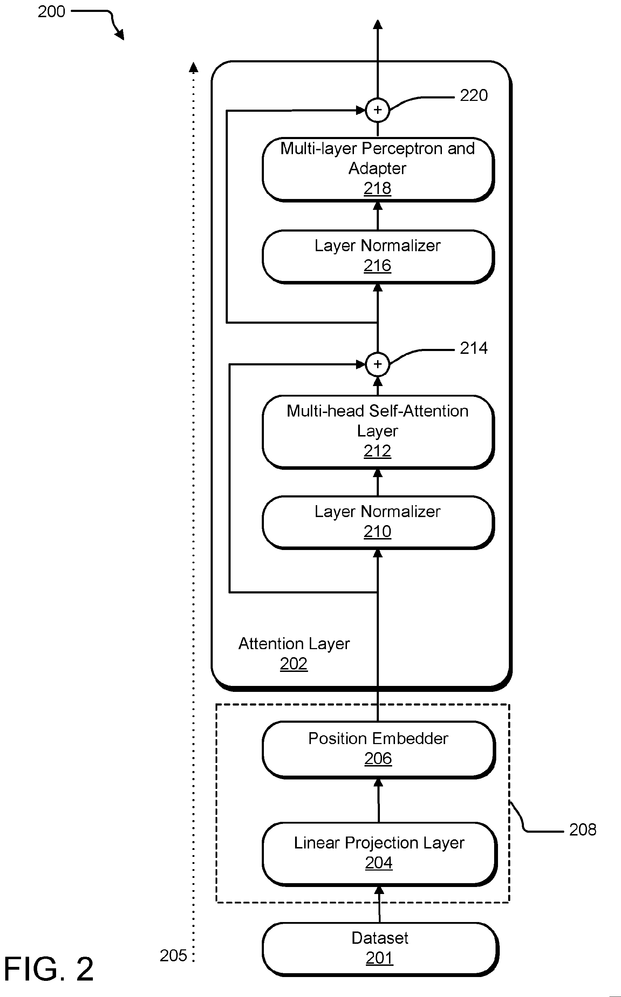

FIG. 2 illustrates an example flow 200 for a feature identification model. Included in the example flow 200 is a flow within an attention layer 202 of a transformer machine learning model of the feature identification model for identifying features in a dataset 201. The flow 200 in FIG. 2 progresses from bottom to top, as indicated by the dashed arrow 205. An input dataset 201 (e.g., an image, text content, audio data, video data, sensor data) is input to a linear projection layer 204, which is a type of neural network layer that projects a higher dimensional vector into a lower dimensional space. In one implementation, the linear projection layer 204 maps or translates "patch arrays" of the input dataset (e.g., small discrete regions of an image) into embedding vectors. Further, a position embedder 206 is a type of neural network that encodes or translates the positions of tokens in the input dataset 201 (e.g., the positions of patches in an input image) into the embedding vectors. Accordingly, the linear projection layer 204 and the position embedder 206 combine to provide an implementation of an embedding processor 208 that encodes dataset tokens and their respective positions into an embedding space for processing by a spectral processor, an attention processor, etc.

For example, for an image of the input dataset 201, $x \in \mathbb{R}^{H \times W \times 3}$, the embedding processor 208 initially divides and flattens the image $x$ into sequential patches $x_p \in \mathbb{R}^{N \times (P^2 d)}$, where (H, W) represents a height and width of the input image, (P, P) represents a resolution of each image patch, $d$ represents an output channel, and $N = HW/P^2$ represents a number of image tokens. The resulting combination of a prepended token and the image tokens $x_p$ is then input into transformer encoders for attention computation.

The embedding space is input to the attention layer 202. The embedded dataset 201 is (1) input to a sequence of operators including a layer normalizer 210 and a multi-head self-attention layer 212, and (2) fed forward to a summer 214. Layer normalizers normalize all the activations of a single layer from a batch by collecting statistics from every unit within the layer. The multi-head self-attention layer 212 includes multiple parallel attention mechanisms that process the dataset 201. In the multi-head self-attention layer, the tokens of the dataset 201 (e.g., image tokens) undergo linear projection and are transformed into three vectors, represented in the following self-attention calculation as Q, K, and V:

$$x'_\ell = Attention(Q, K, V) = Softmax\left(\frac{QK^T}{\sqrt{d}}\right)V \qquad (1)$$

In Equation (1), $x'_\ell$ represents the tokens produced by the multi-head self-attention layer 212 at the $\ell$-th layer.

The outputs of the multiple parallel attention mechanisms in the multi-head self-attention layer 212 are combined (e.g., concatenated and linearly transformed into the expected dimension) and passed to the summer 214, where the original dataset 201 is also added. The resulting output of the summer 214 is (1) input to a sequence of operators including a layer normalizer 216 and a multi-layer perceptron and adapter 218, and (2) fed forward to a summer 220. The output tokens $x'_l$ $x'_\ell$ undergo layer normalization in the layer normalizer 216.

The multi-layer perceptron ("MLP") and adapter 218 includes a feed-forward artificial neural network consisting of fully connected neurons with a nonlinear kind of activation function organized in multiple layers. In some implementations, the MLP of the MLP and adapter 218 includes two fully-connected layers with a Gaussian error linear unit ("GELU") activation in between, which can be represented as follows:

$$ x_\ell = MLP\big(LN(x'_\ell)\big) + x'_\ell \qquad\qquad (2) $$

In Equation (2), $x_\ell$ represents the output of the $\ell$-th encoder block.

Learning occurs in the multi-layer perceptron and adapter 218 by changing connection weights after each item of data is processed based on the amount of error in the output compared to the expected result (e.g., a loss). This is an example of supervised learning and is carried out through backpropagation, a generalization of the least mean squares algorithm in the linear perceptron. In this manner, the multi-layer perceptron and adapter 218 can distinguish data that is not linearly separable, thereby distinguishing and identifying features in the dataset 201. The output of the multi-layer perceptron and adapter 218 is passed to the summer 220, where the output of the summer 214 is also added.

The multi-layer perceptron and adapter 218 includes a spectral adapter that is trained during a refinement training phase feature on a second domain different from the first domain upon which the feature identification model was trained. In some implementations, a spectral MLP of the adapter replaces the MLP feature of the multi-layer perceptron and adapter that was trained on features of the first domain. For example, the first domain is lungs MRI imaging, and the second domain is brain MRI imaging. Executing the refinement training phase includes changing weights (e.g., one or more parameters) associated with an adapter of the multi-layer perceptron and adapter 218 during the refinement training phase but not changing any weights associated with the layer normalizer 216, the multi-head self-attention layer 212, and the layer normalizer 210. During the refinement training phase, weights associated with each of layer normalizer 210, multi-head self-attention layer 212, and layer normalizer 216 are fixed (e.g., do not change), and only the weights associated with the multi-layer perceptron are trained to optimize the identification of features associated with the second domain in a training dataset. Accordingly, after the refinement training phase is complete, the feature identification model shown in FIG. 2 is able to generate output features of both a first domain upon which the feature identification model was initially trained as well as of a second domain upon which the adapter of the MLP and adapter 218 was trained during the refinement training phase.

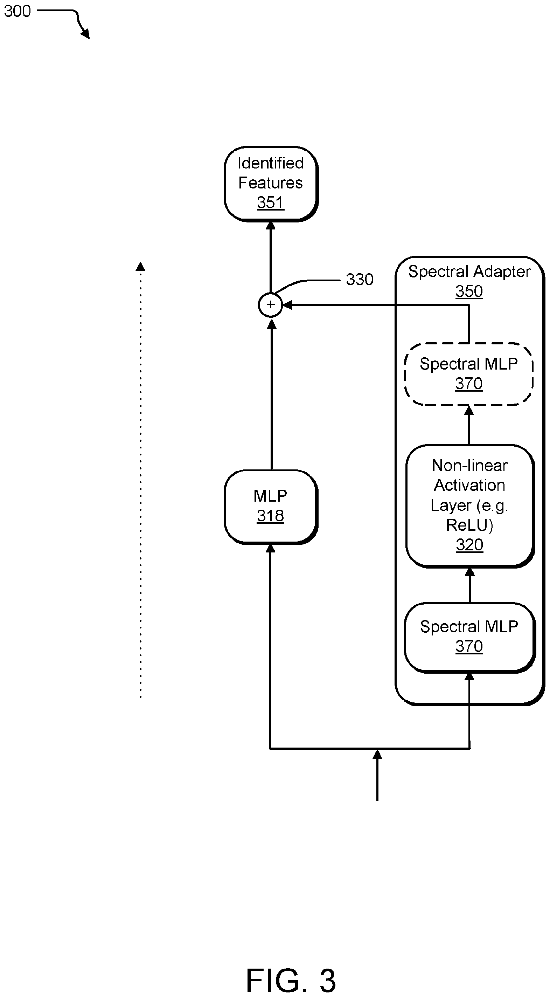

FIG. 3 illustrates an example flow for using a spectral adapter 350 including at least one spectral neural network 370 for training a machine learning model. In some implementations, the spectral adapter 350 replaces the MLP block of a feature identification model that is initially trained to recognize features of a first domain. For example, in the spectral adapter 350, a right MLP block replaces the MLP block of the feature identification model, and a left MLP block (of the feature identification model) is frozen. In some implementations, multiple MLP blocks of the feature identification model are replaced by the MLP of the spectral adapter 350. The spectral adapter 350 is trained during a refinement training phase to recognize features of a second domain that is different from the first domain upon which the MLP block of the feature identification was previously trained. For example, the first domain is a first species, and the second domain is a second species that is different from the first species. For example, the first domain is dogs, and the second domain is cats. In another example, the first domain is MRI imaging of lungs, and the second domain is MRI imaging of brains.

In some implementations, the spectral adapter 350 includes at least one spectral neural network 370 and a nonlinear activation layer 320 that applies a nonlinear activation function, for example, a rectified linear unit ("ReLU") activation function or other nonlinear activation function. The example spectral adapter 350 depicted in FIG. 3 includes two spectral neural networks; however, in some implementations, the spectral adapter 350 includes one, three, or another number of spectral neural networks.

The left branch of the flow 300 retains the original feature identification model's MLP layer, while the right branch of the flow 300 illustrates the spectral adapter 350, which introduces additional lightweight modules tailored for task-specific training. The spectral adapter 350 is configured as a bottleneck structure to limit the number of parameters. The bottleneck structure, in some implementations, includes a first spectral neural network 370 and a second spectral neural network 370 with a nonlinear activation layer 320 in between the spectral neural networks 370. In some implementations, the first spectral neural network 370 is a projection FourierMLP layer ($W_{fml1}$) with parameters $\in \mathbb{R}^{\hat{d} \times d}$ and the second spectral neural network 370 is a projection FourierMLP layer ($W_{fml2}$) with parameters $\in \mathbb{R}^{\hat{d} \times d}$, where $\hat{d}$ represents the bottleneck middle dimension satisfying $\hat{d} \ll d$. In some implementations, the nonlinear activation layer 320 placed between the spectral neural network 370 layers is a rectified linear unit ("ReLu") layer. Other nonlinear activation functions may be used in addition to or instead of a ReLu function. The bottleneck module (the one or more spectral neural network 370 layers and nonlinear activation layer 320) of the spectral adapter 350 connects to the original MLP network 318 on the left branch of the flow 300 through a residual connection with a scale factor s. For a specific input feature $x'_\ell$, the right branch in the Fourier MLP (spectral neural network 370) produces adapted features, $\tilde{x}_\ell$, formally through:

$$\tilde{x}_\ell = ReLU(LN(x'_\ell) \cdot W_{fml1} \cdot W_{fml2}) \tag{3}$$

Both the features $\tilde{x}_\ell$ and $x'_\ell$ are fused with $x_\ell$ using a residual connection:

$$x_\ell = MLP\left(LN(x'_\ell)\right) + s \cdot \tilde{x}_\ell + x'_\ell \tag{4}$$

For example, the outputs of the spectral neural network 370 (e.g., spectral MLP) and original MLP network 318 are summed in summer 330 to generate identified features 351. In some implementations, when applied to an input dataset of the second domain, the spectral adapter 350 replaces an MLP block of an attention layer of the feature identification model for generating an output, while, when applied to an input dataset of the first domain, the MLP block of the attention layer is used to generate the output.

The one or more spectral neural networks 370 of the spectral adapter 350 are configured to capture features in an input dataset. In one implementation, a layer of the spectral neural network 370 begins a transform, enabling the layer to learn the global information of the training dataset using real frequency components. In some implementations, the transform is a Fourier transform. In some implementations, the transform is a Hartley transform or another transform. In some implementations, the second part of the spectral layer undergoes processing through a convolutional operator to capture local image features. In some implementations, these two streams of data are subsequently merged to form a holistic feature representation. The one or more spectral neural networks 370 are configured to efficiently capture features in an input dataset. In one implementation, a layer of the spectral processor begins a transform component (e.g., a Fourier transform, a Hartley transform, or another transform), enabling the component to learn the global information of the dataset using real frequency components as a feature representation. This feature representation is normalized and then passed through a multi-layer perceptron (MLP) layer for classification. In some implementations, the input dataset (and the various gated datasets thereof) can be represented as periodic components and aperiodic components.

The nonlinear activation layer 320 applies a nonlinear activation function to an output of the spectral neural network 370. A nonlinear activation function is a mathematical function used in artificial neural networks. It calculates the output of a node based on its individual inputs and their weights. Unlike linear activation functions, which produce a linear relationship between input and output, nonlinear activation functions introduce complexity and flexibility by producing a nonlinear relationship. For example, a ReLu activation function, which is a type of nonlinear activation function, returns a zero value for any below-zero value or zero value and returns the same input value for any above-zero value to ensure a positive output. In some scenarios, a gaussian error linear units ("GELU") activation function can be used. In implementations in which the machine learning model includes multiple MLP layers (e.g., transformer blocks), the spectral neural network 370 is applied to features of the input dataset and the nonlinear activation function is applied to the output of the spectral neural network 370.

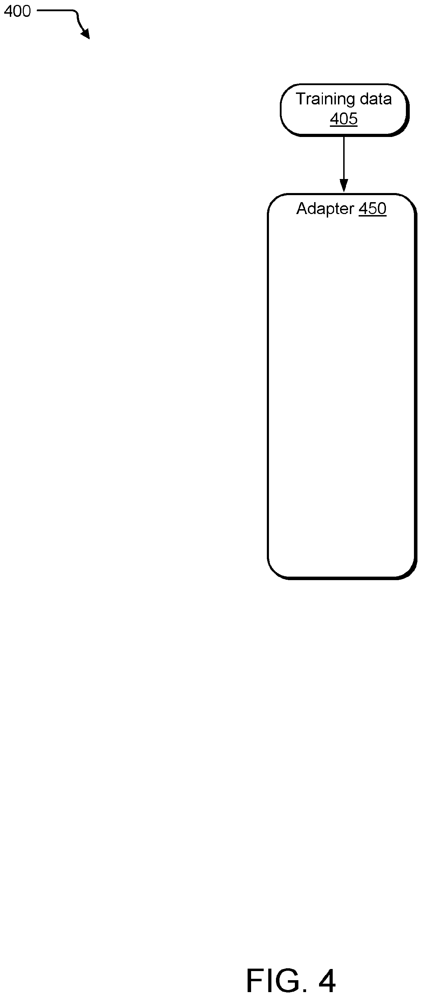

FIG. 4 depicts an example flow 400 for training an adapter 450 of a feature identification model. The example flow 400 progresses from bottom to top. A refinement training phase is performed for the feature identification model to train the adapter 450 to identify, in datasets, features of a second domain that is different from a first domain upon which the feature identification model was initially trained. In some implementations, performing the refinement training phase includes iteratively performing a gradient descent process or other training process to minimize a loss between identified features in the training data 405 of the second domain predicted by the spectral adapter 450 and corresponding ground truth labels associated with the features in the training data 405. During a refinement training phase, only the weights of the adapter 450 are changeable, while the original model parameters of the feature identification model are not changed during the refinement training phase. For example, the original model parameters not corresponding to the adapter 450 weights can be loaded from a pre-trained checkpoint. By completing the refinement training phase, the feature identification model is configured to recognize features of a second domain.

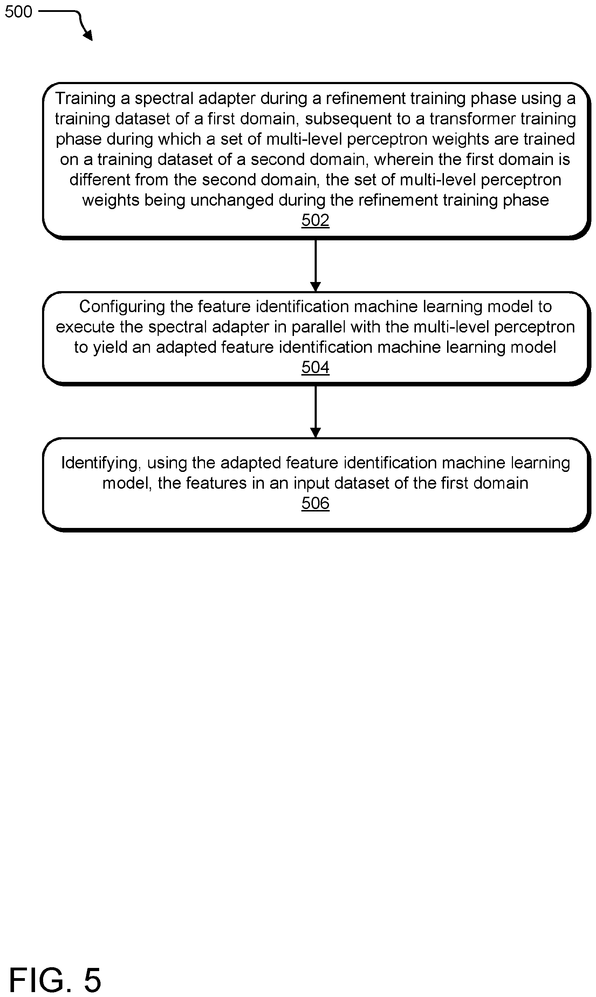

FIG. 5 illustrates example operations 500 for identifying features in an input dataset using an adapter of a feature identification machine learning model trained in a refinement training phase to identify features of a first domain different from a second domain upon which the feature identification machine learning model was previously trained. The example operations 500 include example operation 502, example operation 504, and example operation 506.

Example operation 502 involves training a spectral adapter during a refinement training phase using a training dataset of a first domain, subsequent to a transformer training phase during which a set of multi-level perceptron ("MLP") weights are trained on a training dataset of a second domain, wherein the first domain is different from the second domain, the set of MLP weights being unchanged during the refinement training phase. For example, the training dataset of the first domain includes a dataset representing MRI imaging of lungs, and the training dataset of the second domain includes a dataset representing MRI imaging of brains. In some implementations, initially selected spectral adapter weights are trained during a refinement training phase and are, therefore, changeable/adjustable during the refinement training phase.

However, weights of the feature identification machine learning model other than the spectral adapter weights are not changed during the refinement training phase, while the spectral adapter weights are trained until an output of the adapter is optimized over the second domain. For example, the spectral adapter weights are trained until a loss between features predicted by the spectral adapter and labeled features in training data is minimized.

Example operation 504 involves configuring the feature identification model to execute the spectral adapter in parallel with the multi-layer perceptron to yield an adapted feature identification machine learning model. When the feature identification model is applied to an input dataset of the first domain, the spectral MLP of the adapter replaces the MLP of the feature identification model, and the spectral adapter identifies features of the first domain in the input dataset. When the feature identification model is applied to an input dataset of the second domain, the MLP of the feature identification model that was previously trained on the second domain identifies features of the second domain in the input dataset.

Example operation 506 involves identifying, using the adapter, features of a new input dataset corresponding to the second domain. For example, the adapter, after the refinement training phase, can recognize, using the trained spectral adapter, features of a second domain that is different from the first domain.

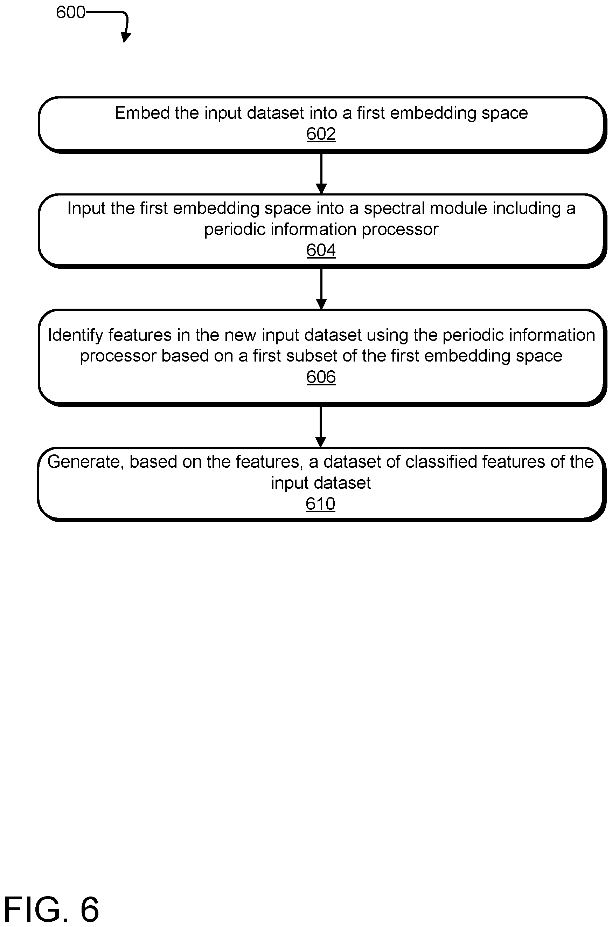

FIG. 6 illustrates example operations 600 for classifying a dataset. An embedding operation 602 embeds the input dataset into a first embedding space. A spectral processing operation 604 inputs the first embedding space into a spectral module that includes a periodic information processor. A periodic information processing operation 606 identifies features in the input dataset using the periodic information processor based on a first subset of the first embedding space. An output operation 610 combines the features into a dataset of classified features of the input dataset.

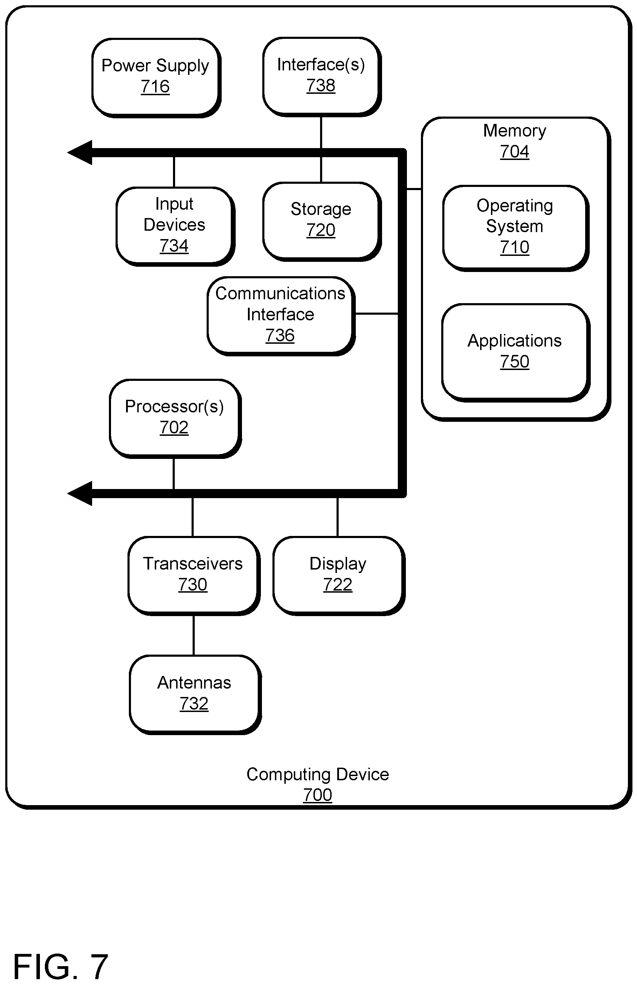

FIG. 7 illustrates an example computing device 700 for use in implementing the described technology. The computing device 700 may be a client computing device (such as a laptop computer, a desktop computer, or a tablet computer), a server/cloud computing device, an Internet-of-Things (IoT), any other type of computing device, or a combination of these options. The computing device 700 includes one or more hardware processor(s) 702 and a memory 704. The memory 704 generally includes both volatile memory (e.g., RAM) and nonvolatile memory (e.g., flash memory), although one or the other type of memory may be omitted. An operating system 710 resides in the memory 704 and is executed by the processor(s) 702. In some implementations, the computing device 700 includes and/or is communicatively coupled to storage 720.

In the example computing device 700, as shown in FIG. 7, one or more software modules, segments, and/or processors, such as applications 750, a transformer, linear projection layers, position embedders, spectral layers, spectral processors, attention layers, attention processors, attention layers, attention networks, processing modules, classifier heads, layer normalizers, multi-layer perceptrons, multi-head self-attention layers, convolutional operators, spectral gating networks, embedding processors, output interfaces, an adapter, a nonlinear activation function, a feature identification model, and other program code and modules are loaded into the operating system 710 on the memory 704 and/or the storage 720 and executed by the processor(s) 702. The storage 720 may store an input dataset, a dataset of identified features, embedding spaces, chunks, weights, and other data and be local to the computing device 700 or may be remote and communicatively connected to the computing device 700. In particular, in one implementation, components of a system for classifying a dataset may be implemented entirely in hardware or in a combination of hardware circuitry and software.

The computing device 700 includes a power supply 716, which may include or be connected to one or more batteries or other power sources, and which provides power to other components of the computing device 700. The power supply 716 may also be connected to an external power source that overrides or recharges the built-in batteries or other power sources.

The computing device 700 may include one or more communication transceivers 730, which may be connected to one or more antenna(s) 732 to provide network connectivity (e.g., mobile phone network, Wi-Fi®, Bluetooth®) to one or more other servers, client devices, IoT devices, and other computing and communications devices. The computing device 700 may further include a communications interface 736 (such as a network adapter or an I/O port, which are types of communication devices). The computing device 700 may use the adapter and any other types of communication devices for establishing connections over a wide-area network (WAN) or local-area network (LAN). It should be appreciated that the network connections shown are exemplary and that other communications devices and means for establishing a communications link between the computing device 700 and other devices may be used.

The computing device 700 may include one or more input devices 734 such that a user may enter commands and information (e.g., a keyboard, trackpad, or mouse). These and other input devices may be coupled to the server by one or more interfaces 738, such as a serial port interface, parallel port, or universal serial bus (USB). The computing device 700 may further include a display 722, such as a touchscreen display.

The computing device 700 may include a variety of tangible processor-readable storage media and intangible processor-readable communication signals. Tangible processor-readable storage can be embodied by any available media that can be accessed by the computing device 700 and can include both volatile and nonvolatile storage media and removable and non-removable storage media. Tangible processor-readable storage media excludes intangible, transitory communications signals (such as signals per se) and includes volatile and nonvolatile, removable, and non-removable storage media implemented in any method, process, or technology for storage of information such as processor-readable instructions, data structures, program modules, or other data. Tangible processor-readable storage media includes, but is not limited to, RAM, ROM, EEPROM, flash memory or other memory technology, CDROM, digital versatile disks (DVD) or other optical disk storage, magnetic cassettes, magnetic tape, magnetic disk storage, or other magnetic storage devices, or any other tangible medium which can be used to store the desired information and which can be accessed by the computing device 700. In contrast to tangible processor-readable storage media, intangible processor-readable communication signals may embody processor-readable instructions, data structures, program modules, or other data resident in a modulated data signal, such as a carrier wave or other signal transport mechanism. The term "modulated data signal" means a signal that has one or more of its characteristics set or changed in such a manner as to encode information in the signal. By way of example, and not limitation, intangible communication signals include signals traveling through wired media such as a wired network or direct-wired connection, and wireless media such as acoustic, RF, infrared, and other wireless media.

Clause 1. A method for identifying features in an input dataset of a first domain using a feature identification machine learning model including a multi-level perceptron trained on a training dataset of a second domain to yield a set of multi-level perceptron weights trained on the second domain during a transformer training phase, the method comprising: training a spectral adapter including a spectral neural network during a refinement training phase using a training dataset of the first domain, subsequent to the transformer training phase, wherein the first domain is different from the second domain, the set of multi-level perceptron weights being unchanged during the refinement training phase; configuring the feature identification machine learning model to execute the spectral adapter in parallel with the multi-level perceptron to yield an adapted feature identification machine learning model; and identifying, using the adapted feature identification machine learning model, the features in the input dataset of the first domain.

Clause 2. The method of clause 1, wherein training the feature identification machine learning model during the refinement training phase comprises adjusting adapter weights of the spectral neural network.

Clause 3. The method of clause 1, wherein the spectral adapter comprises multiple spectral neural networks including the spectral neural network, wherein training the feature identification machine learning model during the refinement training phase comprises adjusting adapter weights of each of the multiple spectral neural networks.

Clause 4. The method of clause 1, wherein the spectral adapter comprises a nonlinear activation layer that applies a nonlinear activation function to an output of the spectral neural network.

Clause 5. The method of clause 4, wherein the nonlinear activation function is a rectified linear unit ("ReLU").

Clause 6. The method of clause 1, wherein configuring the feature identification machine learning model to execute the spectral adapter in parallel with the multi-level perceptron comprises configuring the feature identification machine learning model to identify features of the first domain using the spectral adapter and features of the second domain using the multi-level perceptron.

Clause 7. The method of clause 1, wherein the features comprise one or more of visual features or audio features.

Clause 8. The method of clause 1, wherein the first domain comprises a first species of features and the second domain comprises a second species of features.

Clause 9. A computing system for identifying features in an input dataset of a first domain using a feature identification machine learning model including a neural network trained on a training dataset of a second domain to yield a set of neural network weights trained on the second domain during a transformer training phase, the computing system comprising: one or more hardware processors; an adapter processor executable by the one or more hardware processors and configured to: train a spectral adapter including a spectral neural network during a refinement training phase using a training dataset of the first domain, subsequent to the transformer training phase, wherein the first domain is different from the second domain, the set of neural network weights being unchanged during the refinement training phase; and a feature identification model processor executable by the one or more hardware processors and configured to configure the feature identification machine learning model to execute the spectral adapter in parallel with the neural network to yield an adapted feature identification machine learning model and to identify, using the adapted feature identification machine learning model, the features in the input dataset of the first domain.

Clause 10. The computing system of clause 9, wherein training the feature identification machine learning model during the refinement training phase comprises adjusting adapter weights of the spectral neural network.

Clause 11. The computing system of clause 9, wherein the spectral adapter comprises multiple spectral neural networks including the spectral neural network, wherein training the feature identification machine learning model during the refinement training phase comprises adjusting adapter weights of each of the multiple spectral neural networks.

Clause 12. The computing system of clause 9, wherein the spectral adapter comprises a nonlinear activation layer that applies a nonlinear activation function to an output of the spectral neural network.

Clause 13. The computing system of clause 12, wherein the nonlinear activation function is a rectified linear unit ("ReLU").

Clause 14. The computing system of clause 9, wherein configuring the feature identification machine learning model to execute the spectral adapter in parallel with the neural network comprises configuring the feature identification machine learning model to identify features of the first domain using the spectral adapter and features of the second domain using the neural network.

Clause 15. The computing system of clause 9, wherein the features comprise one or more of visual features or audio features.

Clause 16. The computing system of clause 9, wherein the first domain comprises a first species of features and the second domain comprises a second species of features.

Clause 17. One or more tangible processor-readable storage media embodied with instructions for executing on one or more processors and circuits of a computing device a process for identifying features in an input dataset of a first domain using a feature identification machine learning model trained on a training dataset of a second domain to yield a set of machine learning model weights trained on the second domain during a transformer training phase, the process comprising: training a spectral adapter including a spectral neural network during a refinement training phase using a training dataset of the first domain, subsequent to the transformer training phase, wherein the first domain is different from the second domain, the set of machine learning model weights being unchanged during the refinement training phase; configuring the feature identification machine learning model to execute the spectral adapter in parallel with the feature identification machine learning model to yield an adapted feature identification machine learning model; and identifying, using the adapted feature identification machine learning model, the features in the input dataset of the first domain.

Clause 18. The one or more tangible processor-readable storage media of clause 17, wherein training the feature identification machine learning model during the refinement training phase comprises adjusting adapter weights of the spectral neural network.

Clause 19. The one or more tangible processor-readable storage media of clause 17, wherein the spectral adapter comprises multiple spectral neural networks including the spectral neural network, wherein training the feature identification machine learning model during the refinement training phase comprises adjusting adapter weights of each of the multiple spectral neural networks.

Clause 20. The one or more tangible processor-readable storage media of clause 17, wherein the spectral adapter comprises a nonlinear activation layer that applies a nonlinear activation function to an output of the spectral neural network.

Clause 21. A system for identifying features in an input dataset of a first domain using a feature identification machine learning model including a multi-level perceptron trained on a training dataset of a second domain to yield a set of multi-level perceptron weights trained on the second domain during a transformer training phase, the system comprising: means for training a spectral adapter including a spectral neural network during a refinement training phase using a training dataset of the first domain, subsequent to the transformer training phase, wherein the first domain is different from the second domain, the set of multi-level perceptron weights being unchanged during the refinement training phase; means for configuring the feature identification machine learning model to execute the spectral adapter in parallel with the multi-level perceptron to yield an adapted feature identification machine learning model; and means for identifying, using the adapted feature identification machine learning model, the features in the input dataset of the first domain.

Clause 22. The system of clause 21, wherein training the feature identification machine learning model during the refinement training phase comprises means for adjusting adapter weights of the spectral neural network.

Clause 23. The system of clause 21, wherein the spectral adapter comprises multiple spectral neural networks including the spectral neural network, wherein training the feature identification machine learning model during the refinement training phase comprises means for adjusting adapter weights of each of the multiple spectral neural networks.

Clause 24. The system of clause 21, wherein the spectral adapter comprises a nonlinear activation layer that applies a nonlinear activation function to an output of the spectral neural network.

Clause 25. The system of clause 24, wherein the nonlinear activation function is a rectified linear unit ("ReLU").

Clause 26. The system of clause 21, wherein configuring the feature identification machine learning model to execute the spectral adapter in parallel with the multi-level perceptron comprises configuring the feature identification machine learning model to identify features of the first domain using the spectral adapter and features of the second domain using the multi-level perceptron.

Clause 27. The system of clause 21, wherein the features comprise one or more of visual features or audio features.

Clause 28. The system of clause 21, wherein the first domain comprises a first species of features and the second domain comprises a second species of features.

Some implementations may comprise an article of manufacture, which excludes software per se. An article of manufacture may comprise a tangible storage medium to store logic and/or data. Examples of a storage medium may include one or more types of computer-readable storage media capable of storing electronic data, including volatile memory or nonvolatile memory, removable or non-removable memory, erasable or non-erasable memory, writeable or re-writeable memory, and so forth. Examples of the logic may include various software elements, such as software components, programs, applications, computer programs, application programs, system programs, machine programs, operating system software, middleware, firmware, software modules, routines, subroutines, operation segments, methods, procedures, software interfaces, application program interfaces (API), instruction sets, computing code, computer code, code segments, computer code segments, words, values, symbols, or any combination thereof. In one implementation, for example, an article of manufacture may store executable computer program instructions that, when executed by a computer, cause the computer to perform methods and/or operations in accordance with the described embodiments. The executable computer program instructions may include any suitable types of code, such as source code, compiled code, interpreted code, executable code, static code, dynamic code, and the like. The executable computer program instructions may be implemented according to a predefined computer language, manner, or syntax, for instructing a computer to perform a certain operation segment. The instructions may be implemented using any suitable high-level, low-level, object-oriented, visual, compiled, and/or interpreted programming language.

The implementations described herein are implemented as logical steps in one or more computer systems. The logical operations may be implemented (1) as a sequence of processor-implemented steps executing in one or more computer systems and (2) as interconnected machine or circuit modules within one or more computer systems. The implementation is a matter of choice, dependent on the performance requirements of the computer system being utilized. Accordingly, the logical operations making up the implementations described herein are referred to variously as operations, steps, objects, or modules. Furthermore, it should be understood that logical operations may be performed in any order, unless explicitly claimed otherwise or a specific order is inherently necessitated by the claim language.

**The following is a list of further preferred embodiments of the invention:**

Embodiment 1. A method for identifying features in an input dataset of a first domain using a feature identification machine learning model including a multi-level perceptron trained on a training dataset of a second domain to yield a set of multi-level perceptron weights trained on the second domain during a transformer training phase, the method comprising:

training a spectral adapter including a spectral neural network during a refinement training phase using a training dataset of the first domain, subsequent to the transformer training phase, wherein the first domain is different from the second domain, the set of multi-level perceptron weights being unchanged during the refinement training phase;

configuring the feature identification machine learning model to execute the spectral adapter in parallel with the multi-level perceptron to yield an adapted feature identification machine learning model; and

identifying, using the adapted feature identification machine learning model, the features in the input dataset of the first domain.

Embodiment 2. The method of embodiment 1, wherein training the feature identification machine learning model during the refinement training phase comprises adjusting adapter weights of the spectral neural network.

Embodiment 3. The method of embodiment 1, wherein the spectral adapter comprises multiple spectral neural networks including the spectral neural network, wherein training the feature identification machine learning model during the refinement training phase comprises adjusting adapter weights of each of the multiple spectral neural networks.

Embodiment 4. The method of embodiment 1, wherein the spectral adapter comprises a nonlinear activation layer that applies a nonlinear activation function to an output of the spectral neural network.

Embodiment 5. The method of embodiment 4, wherein the nonlinear activation function is a rectified linear unit ("ReLU").

Embodiment 6. The method of embodiment 1, wherein configuring the feature identification machine learning model to execute the spectral adapter in parallel with the multi-level perceptron comprises configuring the feature identification machine learning model to identify features of the first domain using the spectral adapter and features of the second domain using the multi-level perceptron.

Embodiment 7. The method of embodiment 1, wherein the features comprise one or more of visual features or audio features.

Embodiment 8. The method of embodiment 1, wherein the first domain comprises a first species of features and the second domain comprises a second species of features.

Embodiment 9. A computing system for identifying features in an input dataset of a first domain using a feature identification machine learning model including a neural network trained on a training dataset of a second domain to yield a set of neural network weights trained on the second domain during a transformer training phase, the computing system comprising:

one or more hardware processors;

an adapter processor executable by the one or more hardware processors and configured to: train a spectral adapter including a spectral neural network during a refinement training phase using a training dataset of the first domain, subsequent to the transformer training phase, wherein the first domain is different from the second domain, the set of neural network weights being unchanged during the refinement training phase; and

a feature identification model processor executable by the one or more hardware processors and configured to configure the feature identification machine learning model to execute the spectral adapter in parallel with the neural network to yield an adapted feature identification machine learning model and to identify, using the adapted feature identification machine learning model, the features in the input dataset of the first domain.

Embodiment 10. The computing system of embodiment 9, wherein training the feature identification machine learning model during the refinement training phase comprises adjusting adapter weights of the spectral neural network.

Embodiment 11. The computing system of embodiment 9, wherein the spectral adapter comprises multiple spectral neural networks including the spectral neural network, wherein training the feature identification machine learning model during the refinement training phase comprises adjusting adapter weights of each of the multiple spectral neural networks.

Embodiment 12. The computing system of embodiment 9, wherein the spectral adapter comprises a nonlinear activation layer that applies a nonlinear activation function to an output of the spectral neural network.

Embodiment 13. The computing system of embodiment 12, wherein the nonlinear activation function is a rectified linear unit ("ReLU").

Embodiment 14. The computing system of embodiment 9, wherein configuring the feature identification machine learning model to execute the spectral adapter in parallel with the neural network comprises configuring the feature identification machine learning model to identify features of the first domain using the spectral adapter and features of the second domain using the neural network.

Embodiment 15. The computing system of embodiment 9, wherein the features comprise one or more of visual features or audio features.

Embodiment 16. The computing system of embodiment 9, wherein the first domain comprises a first species of features and the second domain comprises a second species of features.

Embodiment 17. One or more tangible processor-readable storage media embodied with instructions for executing on one or more processors and circuits of a computing device a process for identifying features in an input dataset of a first domain using a feature identification machine learning model trained on a training dataset of a second domain to yield a set of machine learning model weights trained on the second domain during a transformer training phase, the process comprising:

training a spectral adapter including a spectral neural network during a refinement training phase using a training dataset of the first domain, subsequent to the transformer training phase, wherein the first domain is different from the second domain, the set of machine learning model weights being unchanged during the refinement training phase;

configuring the feature identification machine learning model to execute the spectral adapter in parallel with the feature identification machine learning model to yield an adapted feature identification machine learning model;

and

identifying, using the adapted feature identification machine learning model, the features in the input dataset of the first domain.

Embodiment 18. The one or more tangible processor-readable storage media of embodiment 17, wherein training the feature identification machine learning model during the refinement training phase comprises adjusting adapter weights of the spectral neural network.

Embodiment 19. The one or more tangible processor-readable storage media of embodiment 17, wherein the spectral adapter comprises multiple spectral neural networks including the spectral neural network, wherein training the feature identification machine learning model during the refinement training phase comprises adjusting adapter weights of each of the multiple spectral neural networks.

Embodiment 20. The one or more tangible processor-readable storage media of embodiment 17, wherein the spectral adapter comprises a nonlinear activation layer that applies a nonlinear activation function to an output of the spectral neural network.

**Claims**

1. A method (500) for identifying features in an input dataset (201) of a first domain using a feature identification machine learning model including a multi-level perceptron trained on a training dataset (201) of a second domain to yield a set of multi-level perceptron weights trained on the second domain during a transformer training phase, the method comprising:

   training (502) a spectral adapter (450) (218) (110) (350) including a spectral neural network (370) during a refinement training phase (109) using a training dataset (201) of the first domain, subsequent to the transformer training phase, wherein the first domain is different from the second domain, the set of multi-level perceptron weights being unchanged during the refinement training phase (109);
   configuring (504) the feature identification machine learning model to execute the spectral adapter (450) (218) (110) (350) in parallel with the multi-level perceptron to yield an adapted feature identification machine learning model; and
   identifying (506), using the adapted feature identification machine learning model, the features in the input dataset (201) of the first domain.

2. The method of claim 1, wherein training the feature identification machine learning model during the refinement training phase comprises adjusting adapter weights of the spectral neural network.

3. The method of one of claims 1 or 2, wherein the spectral adapter comprises multiple spectral neural networks including the spectral neural network, wherein training the feature identification machine learning model during the refinement training phase comprises adjusting adapter weights of each of the multiple spectral neural networks.

4. The method of one of claims 1 to 3, wherein the spectral adapter comprises a nonlinear activation layer that applies a nonlinear activation function to an output of the spectral neural network.

5. The method of claim 4, wherein the nonlinear activation function is a rectified linear unit ("ReLU").

6. The method of one of claims 1 to 5, wherein configuring the feature identification machine learning model to execute the spectral adapter in parallel with the multi-level perceptron comprises configuring the feature identification machine learning model to identify features of the first domain using the spectral adapter and features of the second domain using the multi-level perceptron.

7. The method of one of claims 1 to 6, wherein the features comprise one or more of visual features or audio features, or wherein the first domain comprises a first species of features and the second domain comprises a second species of features.

8. A computing system (100) for identifying features in an input dataset (201) of a first domain using a feature identification machine learning model including a neural network trained on a training dataset (201) of a second domain to yield a set of neural network weights trained on the second domain during a transformer training phase, the computing system (100) comprising:

one or more hardware processors (702);
an adapter (450) (218) (110) processor executable by the one or more hardware processors (702) and configured to: train (502) a spectral adapter (450) (218) (110) (350) including a spectral neural network (370) during a refinement training phase (109) using a training dataset (201) of the first domain, subsequent to the transformer training phase, wherein the first domain is different from the second domain, the set of neural network weights being unchanged during the refinement training phase (109); and
a feature identification model (105) processor executable by the one or more hardware processors (702) and configured to configure (504) the feature identification machine learning model to execute the spectral adapter (450) (218) (110) (350) in parallel with the neural network to yield an adapted feature identification machine learning model and to identify (506), using the adapted feature identification machine learning model, the features in the input dataset (201) of the first domain.

9. The computing system of claim 8, wherein training the feature identification machine learning model during the refinement training phase comprises adjusting adapter weights of the spectral neural network.

10. The computing system of claim 8 or 9, wherein the spectral adapter comprises multiple spectral neural networks including the spectral neural network, wherein training the feature identification machine learning model during the refinement training phase comprises adjusting adapter weights of each of the multiple spectral neural networks.

11. The computing system of one of claims 8 to 10, wherein the spectral adapter comprises a nonlinear activation layer that applies a nonlinear activation function to an output of the spectral neural network, and/or
wherein the nonlinear activation function is a rectified linear unit ("ReLU").

12. The computing system of one of claims 8 to 11, wherein configuring the feature identification machine learning model to execute the spectral adapter in parallel with the neural network comprises configuring the feature identification machine learning model to identify features of the first domain using the spectral adapter and features of the second domain using the neural network.

13. The computing system of one of claims 8 to 12, wherein the features comprise one or more of visual features or audio features, or
wherein the first domain comprises a first species of features and the second domain comprises a second species of features.

14. One or more tangible processor-readable storage (720) media embodied with instructions for executing on one or more processors (702) and circuits of a computing device (700) a process (500) for identifying features in an input dataset (201) of a first domain using a feature identification machine learning model trained on a training dataset (201) of a second domain to yield a set of machine learning model weights trained on the second domain during a transformer training phase, the process (500) comprising:

training (502) a spectral adapter (450) (218) (110) (350) including a spectral neural network (370) during a refinement training phase (109) using a training dataset (201) of the first domain, subsequent to the transformer training phase, wherein the first domain is different from the second domain, the set of machine learning model weights being unchanged during the refinement training phase (109);
configuring (504) the feature identification machine learning model to execute the spectral adapter (450) (218) (110) (350) in parallel with the feature identification machine learning model to yield an adapted feature identification machine learning model; and
identifying (506), using the adapted feature identification machine learning model, the features in the input dataset (201) of the first domain.

15. The one or more tangible processor-readable storage media of claim 14, wherein training the feature identification machine learning model during the refinement training phase comprises adjusting adapter weights of the spectral neural network, or

wherein the spectral adapter comprises multiple spectral neural networks including the spectral neural network, wherein training the feature identification machine learning model during the refinement training phase comprises adjusting adapter weights of each of the multiple spectral neural networks, or

wherein the spectral adapter comprises a nonlinear activation layer that applies a nonlinear activation function to an output of the spectral neural network.

100

102

Feature Identification Model
105

Identified First Domain Features
106

103

Poorly Identified Second Domain Features
107

Refinement Training Phase
109

Refined Feature Identification Model
150

103

Adapter 110

Identified Second Domain Features
108

FIG. 1

FIG. 2

200

Attention Layer
202

220 +

Multi-layer Perceptron and Adapter
218

Layer Normalizer
216

214 +

Multi-head Self-Attention Layer
212

Layer Normalizer
210

205

Position Embedder
206

208

Linear Projection Layer
204

Dataset
201

300

Identified
Features
**351**

Spectral Adapter
**350**

330

+

Spectral MLP
**370**

Non-linear
Activation
Layer (e.g.
ReLU)
**320**

MLP
**318**

Spectral MLP
**370**

# FIG. 3

400

Training data
405

Adapter 450

FIG. 4

500

Training a spectral adapter during a refinement training phase using a training dataset of a first domain, subsequent to a transformer training phase during which a set of multi-level perceptron weights are trained on a training dataset of a second domain, wherein the first domain is different from the second domain, the set of multi-level perceptron weights being unchanged during the refinement training phase
502

Configuring the feature identification machine learning model to execute the spectral adapter in parallel with the multi-level perceptron to yield an adapted feature identification machine learning model
504

Identifying, using the adapted feature identification machine learning model, the features in an input dataset of the first domain
506

FIG. 5

600

Embed the input dataset into a first embedding space
602

Input the first embedding space into a spectral module including a periodic information processor
604

Identify features in the new input dataset using the periodic information processor based on a first subset of the first embedding space
606

Generate, based on the features, a dataset of classified features of the input dataset
610

FIG. 6

FIG. 7

| | Europäisches Patentamt European Patent Office Office européen des brevets | **EUROPEAN SEARCH REPORT** | **Application Number** EP 25 16 1298 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Narayana Badri ET AL: "SpectFormer: Frequency and Attention is what you need in a Vision Transformer", , 14 April 2023 (2023-04-14), pages 1-14, XP093286368, Retrieved from the Internet: URL:https://arxiv.org/pdf/2304.06446 * abstract * * Section 3.2 * * Section 3.3 * * Section 4.5 * * Section 4.7 * * figure 6 * | 1-15 | INV. G06F16/906 G06N3/00 |
| X | US 2019/035083 A1 (LIN ZHE [US] ET AL) 31 January 2019 (2019-01-31) * abstract * * paragraph [0010] * * paragraph [0084] * * figure 3 * | 1-15 | |
| | | | TECHNICAL FIELDS SEARCHED (IPC) G06F G06N |

The present search report has been drawn up for all claims

| Place of search | Date of completion of the search | Examiner |
|---|---|---|
| Berlin | 12 June 2025 | Pose Rodríguez, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 16 1298

This annex lists the patent family members relating to the patent documents cited in the above-mentioned European search report.
The members are as contained in the European Patent Office EDP file on
The European Patent Office is in no way liable for these particulars which are merely given for the purpose of information.

12-06-2025

| Patent document cited in search report | Publication date | Patent family member(s) | | Publication date |
|---|---|---|---|---|
| US 2019035083 A1 | 31-01-2019 | AU | 2018200165 A1 | 04-10-2018 |
| | | CN | 108573257 A | 25-09-2018 |
| | | DE | 102018000299 A1 | 20-09-2018 |
| | | GB | 2560621 A | 19-09-2018 |
| | | US | 2018268548 A1 | 20-09-2018 |
| | | US | 2019035083 A1 | 31-01-2019 |

For more details about this annex : see Official Journal of the European Patent Office, No. 12/82